(19) Europäisches Patentamt
European Patent Office
Office européen des brevets

(11) **EP 2 147 034 B1**

(12) **EUROPEAN PATENT SPECIFICATION**

(45) Date of publication and mention
of the grant of the patent:
**17.12.2014   Bulletin 2014/51**

(51) Int Cl.:
***C08G 59/18*** *(2006.01)*

(21) Application number: **08746559.7**

(86) International application number:
**PCT/US2008/061163**

(22) Date of filing: **22.04.2008**

(87) International publication number:
**WO 2008/140906 (20.11.2008 Gazette 2008/47)**

(54) **EPOXY THERMOSET COMPOSITIONS COMPRISING EXCESS EPOXY RESIN AND PROCESS FOR THE PREPARATION THEREOF**

WÄRMEHÄRTENDE EPOXIDZUSAMMENSETZUNGEN MIT ÜBERSCHÜSSIGEM EPOXIDHARZ UND HERSTELLUNGSVERFAHREN DAFÜR

COMPOSITIONS ÉPOXYDES THERMODURCIES COMPRENANT DE LA RÉSINE ÉPOXYDE EN EXCÈS ET PROCÉDÉ POUR LA PRÉPARATION DE CELLES-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.05.2007   US 928482 P**

(43) Date of publication of application:
**27.01.2010   Bulletin 2010/04**

(73) Proprietor: **Dow Global Technologies LLC Midland, MI 48674 (US)**

(72) Inventors:
• **MARKS, Maurice, Joel**
**Lake Jackson, TX 77566 (US)**
• **SHERMAN, Courtney, Lawrence**
**Lake Jackson, TX 77566 (US)**

(74) Representative: **Beck Greener**
**Fulwood House**
**12 Fulwood Place**
**London WC1V 6HR (GB)**

(56) References cited:
**EP-A- 0 249 262       EP-A- 0 661 322**
**WO-A-2004/078870    US-A- 4 181 784**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF DISCLOSURE

Field of the Disclosure

Embodiments disclosed herein relate generally to epoxy thermoset compositions. More specifically, embodiments disclosed herein relate to epoxy thermoset compositions having improved toughness and/or higher heat resistance.

Background

Epoxies resins are one of the most widely used engineering resins, and are well-known for their use in composites with high strength fibers. Epoxy resins form a glassy network, exhibit excellent resistance to corrosion and solvents, good adhesion, reasonably high glass transition temperatures, and adequate electrical properties. Unfortunately, crosslinked, glassy epoxy resins with relatively high glass transition temperatures (>100°C) are brittle. The poor impact strength of high glass transition temperature epoxy resins limits the usage of epoxies as structural materials and in composites.

The impact strength, fracture toughness, ductility, as well as most other physical properties of crosslinked epoxy resins is controlled by the chemical structure and ratio of the epoxy resin and hardener, by any added macroscopic fillers, toughening agents, and other additives, and by the curing conditions used. Typical performance requirements of thermoset resins, including epoxies, include a high softening point (>200°C), low flammability, hydrolytic resistance, chemical and solvent resistance, and dielectric rigidity.

Epoxy formulations typically contain approximately a stoichiometric amount of epoxy resin, generally with a minor amount of excess epoxy. Formulations containing excess amount of epoxy resin are generally not cured to react the excess epoxy resin, thus leaving the epoxy resin to act as a plasticizer in the cured composition, often resulting in a decrease in the desired strength, adhesion, moisture absorption, solvent resistance, and electrical properties of the cured resin.

For example, U.S. Patent Application Publication No. 2005021565 discloses a photocurable and thermosetting resin composition, where a ratio of epoxy groups less than 0.6 equivalents is not preferred because the remaining carboxyl groups will degrade the electrical insulating and resistance to alkalis. Conversely, the ratio of the epoxy group exceeding 2.0 equivalents is not preferred because the excess epoxy resin functions as a plasticizing agent and, as a result, the strength of the coating film will be degraded.

Similarly, U.S. Patent Nos. 7,060,786 and 6,808,819 discloses that controlling the ratio of epoxy groups to phenolic hydroxyl groups within a ratio of 0.7 to 1.3, preferable 0.8 to 1.2, can minimize unreacted residues, and thus suppress age degradation of adhesion, moisture absorption, and electrical properties. U.S. Patent No. 6,949,19 discloses that if too much epoxy radicals are available, the excess of epoxy resin increases the modulus of elasticity, which is inconvenient to form a flexible polyimide resin composition.

U.S. Patent No. 6,469,074 discloses a composition comprising cyanate ester, epoxy resin, and acid anhydride. The '074 patent further states that excess epoxy resin will remain unreacted, leading to a reduction in glass transition temperature, an increase in moisture absorption, an increase in the coefficient of thermal expansion, and may have deteriorated heat cycle and reflow reliability.

U.S. Patent No. 4,393,181 discloses that up to 100 percent excess of either the epoxy resin or curing agent may be employed in the curable composition. Similarly, U.S. Patent No. 4,076,764 discloses that up to 25 percent excess of either the epoxy resin or curing agent may be employed. However, neither of these patents disclose the reaction of the excess epoxy resin.

U.S. Patent No. 4,181,784 discloses a coating composition, and in the background, discussing U.S. Patent Nos. 3,969,979 and 4,018,848 issued to Khanna, teaches away from use of excess epoxy resins. The compositions of Khanna consist of epoxy phosphate esters, formed from epoxy resins and phosphoric acid, and polyols and the like which react with phosphate esters. These compositions have excess epoxy resin, for the purpose of killing off the excess acid catalyst after completion of the curing reaction. Khanna, in the examples, teaches that if the resulting cured resin is heated to higher temperatures, the excess epoxy does react with excess hydroxyl functionality to give further ether linkages. The '784 patent indicates that these linkages have a deleterious effect on the durability of the cured resin. Further, the curing of the excess epoxy resin requires high temperatures and proceeds slowly, without the benefit of catalysts as they were consumed during the low temperature cure. WO2004/078870 discloses a composition that comprises at least one epoxy resin and aliphatic amine, wherein the ratio of epoxy functional group/amine is greater than 1, and imidazole as the curing agent. EP0661322 discloses a modified polyepoxy compound obtained by etherifying a secondary hydroxyl group of a polyepoxy compound having an alcoholic secondary hydroxyl group.

There exists a need for epoxy thermoset resins having improved toughness and/or higher heat resistance.

SUMMARY OF THE DISCLOSURE

In one aspect, embodiments disclosed herein relate to a process for curing a thermoset composition, including: reacting a curable composition comprising from 10 percent to 1000 percent stoichiometric excess of an epoxy resin, an epoxy-reactive compound, and a catalyst; to form a non-isolatable intermediate product having unreacted epoxy groups and secondary hydroxyl groups; and etherifying the non-isolatable intermediate product to react at least a portion of the unreacted epoxy groups and the secondary hydroxyl groups, catalyzed by the catalyst, to form the thermoset composition. Although described in relation to an "intermediate" product, the intermediate product need not be isolatable, and the term "intermediate" is specifically intended to include situations where the intermediate product is not isolatable. In a further aspect, there is disclosed a thermoset composition formed from the first aspect.

In another aspect, embodiments disclosed herein relate to a process for forming a composite, including: disposing a curable composition on a substrate, wherein the curable composition comprises from 10 percent to 1000 percent stoichiometric excess of an epoxy resin, an epoxy-reactive compound, and a catalyst, wherein there is a stoichiometric excess of the epoxy resin; reacting the epoxy resin with the epoxy-reactive compound to form a non-isolatable intermediate product having unreacted epoxy groups and secondary hydroxyl groups; and etherifying the non-isolatable intermediate product to react at least a portion of the unreacted epoxy groups and the secondary hydroxyl groups, catalyzed by the catalyst, to form a thermoset composition.

Other aspects and advantages will be apparent from the following description and the appended claims.

BRIEF DESCRIPTION OF DRAWINGS

Figure 1 compares NMR spectra of chain extended networks (CEN's) for epoxy resins having excess unreacted epoxy groups and epoxy resins according to embodiments disclosed herein.

Figure 2 is a graph illustrating the alkyl ether branching levels for various epoxy resins according to embodiments disclosed herein.

Figure 3 is a graph illustrating the kinetics of a CEN according to embodiments disclosed herein.

Figure 4 is a comparison of glass transition temperature for epoxy resins having excess unreacted epoxy groups and epoxy resins according to embodiments disclosed herein.

Figure 5 is a comparison of the density of epoxy resins having excess unreacted epoxy groups and epoxy resins according to embodiments disclosed herein.

Figures 6 and 7 are graphical comparison of dynamic mechanical temperature analysis data for epoxy resins having excess unreacted epoxy groups and epoxy resins according to embodiments disclosed herein.

Figure 8 is a comparison of the degradation temperature for epoxy resins having excess unreacted epoxy groups and epoxy resins according to embodiments disclosed herein.

Figure 9 is a comparison of the CTE for epoxy resins having excess unreacted epoxy groups and epoxy resins according to embodiments disclosed herein.

Figure 10 is a comparison of the fracture toughness of epoxy resins having excess unreacted epoxy groups and epoxy resins according to embodiments disclosed herein.

Figures 11 and 12 compare the tensile yield for phenolic-only CEN's and epoxy resins according to embodiments disclosed herein.

DETAILED DESCRIPTION

Advantageously and surprisingly, the present inventors have discovered thermoset compositions having improved toughness and/or higher heat resistance may be formed using epoxy-resin compositions containing an excess of epoxy groups. In one aspect, embodiments disclosed herein relate to epoxy thermoset compositions having improved toughness. In another aspect, embodiments disclosed herein relate to epoxy thermoset compositions having higher heat resistance. Thermoset compositions disclosed herein may include the reaction product of a stoichiometric excess of an epoxy resin and an epoxy-reactive compound (curing agent), wherein following the reaction of the epoxy resin and the curing agent, the excess epoxy resin has substantially reacted / etherified.

Thermoset compositions having improved toughness and/or higher heat resistance disclosed herein may be formed by curing a curable composition including a stoichiometric excess of an epoxy resin, an epoxy-reactive compound, and a catalyst. The epoxy resin may be reacted with the epoxy reactive compound, and, subsequently, excess epoxy groups may be reacted to form additional crosslinking groups.

In some embodiments disclosed herein, a curable composition may include a stoichiometric excess of an epoxy resin, an epoxy-reactive compound, and a catalyst. The epoxy resin may be reacted with the epoxy-reactive compound.

Subsequently, the excess epoxy groups may be reacted to form additional crosslinking. The sequential reaction of the excess epoxy groups may be catalyzed by a catalyst. By reacting the excess epoxy groups sequentially, some embodiments of the resulting cured composition may have a lower bulk density; other embodiments may have a higher fracture toughness, and yet other embodiments may have a higher heat resistance. By use of a co-reactive curing agent, significant degradation of the epoxy thermoset during the cure of the excess epoxy groups may be avoided.

Curable compositions disclosed herein include from 10 percent to 1000 percent stoichiometric excess of epoxy. In other embodiments, curable compositions disclosed herein may include from 20 percent to 750 percent in other embodiments; and from 50 percent to 500 percent in yet other embodiments.

Epoxy networks described herein may be prepared by two reaction mechanisms. The first reaction mechanism is the reaction of an epoxy resin with some type of coreactive hardener, such as an amine or a phenolic compound that is incorporated stoichiometrically into the polymer network, typically producing a secondary hydroxyl group. The second reaction mechanism is the etherification of an epoxy resin, such as by reaction of the secondary hydroxyl group with the epoxy. The etherification reaction is typically slower than the reaction of the hardener and the epoxy, and may be catalyzed using Lewis bases, such as an imidazole. It has been found that the sequential, or at least partially sequential, reactions including the etherification of the excess epoxy resin, may result in improved properties of the epoxy thermoset.

As described above, embodiments of the processes and composition herein may include epoxy resins, curing agents / hardeners (epoxy-reactive compounds), and catalysts. Additionally, compositions herein may include various additives and other modifiers such as chain extenders, flow modifiers, and solvents. Each of these is described in more detail below, followed by examples of the reactions and thermoset compositions described herein.

EPOXY RESIN

The epoxy resins used in embodiments disclosed herein may vary and include conventional and commercially available epoxy resins, which may be used alone or in combinations of two or more, including, for example, novalac resins, isocyanate modified epoxy resins, and carboxylate adducts, among others. In choosing epoxy resins for compositions disclosed herein, consideration should not only be given to properties of the final product, but also to viscosity and other properties that may influence the processing of the resin composition.

The epoxy resin component may be any type of epoxy resin useful in molding compositions, including any material containing one or more reactive oxirane groups, referred to herein as "epoxy groups" or "epoxy functionality." Epoxy resins useful in embodiments disclosed herein may include mono-functional epoxy resins, multi- or poly-functional epoxy resins, and combinations thereof. Monomeric and polymeric epoxy resins may be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In some embodiments, epoxy resins may also include reactive -OH groups, which may react at higher temperatures with anhydrides, organic acids, amino resins, phenolic resins, or with epoxy groups (when catalyzed) to result in additional crosslinking.

In general, the epoxy resins may be glycidated resins, cycloaliphatic resins, epoxidized oils, and so forth. The glycidated resins are frequently the reaction product of a glycidyl ether, such as epichlorohydrin, and a bisphenol compound such as bisphenol A; $C_4$ to $C_{28}$ alkyl glycidyl ethers; $C_2$ to $C_{28}$ alkyl-and alkenyl-glycidyl esters; $C_1$ to $C_{28}$ alkyl-, mono- and poly-phenol glycidyl ethers; polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl) oxirane bisphenol A diglycidyl ether.

In some embodiments, the epoxy resin may include glycidyl ether type; glycidyl-ester type; alicyclic type; heterocyclic type, and halogenated epoxy resins, etc. Non-limiting examples of suitable epoxy resins may include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds may include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobispehnol A (2,2-bis(4-(2,3-epoxypropoxy)3-bromo-phenyl)propane), diglydicylether of bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found may be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins may also include glycidyl derivatives of one or more of: aromatic diamines, aromatic monoprimary amines, aminophenols, polyhydric phenols, polyhydric alcohols, polycarboxylic acids.

Useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-napthalene dicarboxylic acid, and dimerized linoleic acid; polyglycidyl ethers of polyphenols, such as, for example, bis-phenol A, bis-phenol F, 1,1-bis(4-hydroxyphenyl)ethane, 1,1-bis(4-hydroxyphenyl)isobutane, and 1,5-dihydroxy napthalene; modified epoxy resins with acrylate or urethane moieties; glycidlyamine epoxy resins; and novolac resins.

The epoxy compounds may be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like: Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are particularly useful include those based on glycidyl ether monomers. Examples are di- or polyglycidyl ethers of polyhydric phenols obtained by reacting a polyhydric phenol with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether.

Another class of epoxy compounds are polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methyl-methacrylateglycidylacrylate and a 62.5:24:13.5 methylmethacrylate-ethyl acrylate-glycidylmethacrylate.

Epoxy compounds that are readily available include octadecylene oxide; glycidylmethacrylate; D.E.R. 331 (bisphenol A liquid epoxy resin) and D.E.R.332 (diglycidyl ether of bisphenol A) available from The Dow Chemical Company, Midland, Michigan; vinylcyclohexene dioxide; 3,4-epoxycyclohexylmethyl-3,4-epoxycyclohexane carboxylate; 3,4-epaxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bisphenol type epoxy resin available under the tradename D.E.R. 580, available from The Dow Chemical Company, Midland, Michigan); 1,4-butanediol diglycidyl ether of phenolformaldehyde novolac (such as those available under the tradenames D.E.N. 431 and D.E.N. 438 available from The Dow Chemical Company, Midland, Michigan); and resorcinol diglycidyl ether Although not specifically mentioned, other epoxy resins under the tradename designations D.E.R. and D.E.N. available from the Dow Chemical Company may also be used.

Epoxy resins may also include isocyanate modified epoxy resins. Polyepoxide polymers or copolymers with isocyanate or polyisocyanate functionality may include epoxy-polyurethane copolymers. These materials may be formed by the use of a polyepoxide prepolymer having one or more oxirane rings to give a 1,2-epoxy functionality and also having open oxirane rings, which are useful as the hydroxyl groups for the dihydroxyl-containing compounds for reaction with diisocyanate or polyisocyanates. The isocyanate moiety opens the oxirane ring and the reaction continues as an isocyanate reaction with a primary or secondary hydroxyl group. There is sufficient epoxide functionality on the polyepoxide resin to enable the production of an epoxy polyurethane copolymer still having effective oxirane rings. Linear polymers may be produced through reactions of diepoxides and diisocyanates. The di- or polyisocyanates may be aromatic or aliphatic in some embodiments.

Other suitable epoxy resins are disclosed in, for example, U.S. Patent Nos. 7,163,973, 6,632,893, 6,242,083, 7,037,958, 6,572,971, 6,153,719, and 5,405,688 and U.S. Patent Application Publication Nos. 20060293172 and 20050171237, each of which is hereby incorporated herein by reference.

As described below, curing agents and toughening agents may include epoxy functional groups. These epoxy-containing curing agents and toughening agents should not be considered herein part of the above described epoxy resins.

CURING AGENT (Epoxy-reactive compound)

A hardener or curing agent may be provided for promoting crosslinking of the epoxy resin composition to form a polymer composition. As with the epoxy resins, the hardeners and curing agents may be used individually or as a mixture of two or more.

Curing agents may include primary and secondary polyamines and their adducts, anhydrides, and polyamides. For example, polyfunctional amines may include aliphatic amine compounds such as diethylene triamine (D.E.H. 20, available from The Dow Chemical Company, Midland, Michigan), triethylene tetramine (D.E.H. 24, available from The Dow Chemical Company, Midland, Michigan), tetraethylene pentamine (D.E.H. 26, available from The Dow Chemical Company, Midland, Michigan), as well as adducts of the above amines with epoxy resins, diluents, or other amine-reactive compounds. Aromatic amines, such as metaphenylene diamine and diamine diphenyl sulfone, aliphatic polyamines, such as amino ethyl piperazine and polyethylene polyamine, and aromatic polyamines, such as metaphenylene diamine, diamino diphenyl sulfone, and diethyltoluene diamine, may also be used.

Anhydride curing agents may include, for example, nadic methyl anhydride, hexahydrophthalic anhydride, trimellitic anhydride, dodecenyl succinic anhydride, phthalic anhydride, methyl hexahydrophthalic anhydride, tetrahydrophthalic anhydride, and methyl tetrahydrophthalic anhydride, among others.

The hardener or curing agent may include a phenol-derived or substituted phenol-derived novolac or an anhydride. Non-limiting examples of suitable hardeners include phenol novolac hardener, cresol novolac hardener, dicyclopentadiene phenol hardener, limonene type hardener, anhydrides, and mixtures thereof.

In some embodiments, the phenol novolac hardener may contain a biphenyl or naphthyl moiety. The phenolic hydroxy groups may be attached to the biphenyl or naphthyl moiety of the compound. This type of hardener may be prepared, for example, according to the methods described in EP915118A1. For example, a hardener containing a biphenyl moiety may be prepared by reacting phenol with bismethoxy-methylene biphenyl.

In other embodiments, curing agents may include dicyandiamide and diaminocyclohexane. Curing agents may also include imidazoles, their salts, and adducts. These epoxy curing agents are typically solid at room temperature. Examples of suitable imadazole curing agents are disclosed in EP906927A1. Other curing agents include aromatic amines, aliphatic amines, anhydrides, and phenols.

In some embodiments, the curing agents may be an amino compound having a molecular weight up to 500 per amino group, such as an aromatic amine or a guanidine derivative. Examples of amino curing agents include 4-chlorophenyl-N,N-dimethyl-urea and 3,4-dichlorophenyl-N,N-dimethyl-urea.

Other examples of curing agents useful in embodiments disclosed herein include: 3,3'- and 4,4'-diaminodiphenylsulfone; methylenedianiline; bis(4-amino-3,5-dimethylphenyl)-1,4-diisopropylbenzene available as EPON 1062 from Shell Chemical Co.; and bis(4-aminophenyl)-1,4-diisopropylbenzene available as EPON 1061 from Shell Chemical Co.

Thiol curing agents for epoxy compounds may also be used, and are described, for example, in U.S. Pat. No. 5,374,668. As used herein, "thiol" also includes polythiol or polymercaptan curing agents. Illustrative thiols include aliphatic thiols such as methanedithiol, propanedithiol, cyclohexanedithiol, 2-mercaptoethyl-2,3-dimercaptosuccinate, 2,3-dimercapto-1-propanal(2-mercaptoacetate), diethylene glycol bis(2-mercaptoacetate), 1,2-dimercaptopropyl methyl ether, bis(2-mercaptoethyl)ether, trimethylolpropane tris(thioglycolate), pentaerythritol tetra(mercaptopropionate), pentaerythritol tetra(thioglycolate), ethyleneglycol dithioglycolate, trimethylolpropane tris(beta-thiopropionate), tris-mercaptan derivative of tri-glycidyl ether of propoxylated alkane, and dipentaerythritol poly(beta-thiopropionate); halogen-substituted derivatives of the aliphatic thiols; aromatic thiols such as di-, tris- or tetra-mercaptobenzene, bis-, tris- or tetra-(mercaptoalkyl)benzene, dimercaptobiphenyl, toluenedithiol and naphthalenedithiol; halogen-substituted derivatives of the aromatic thiols; heterocyclic ring-containing thiols such as amino-4,6-dithiol-sym-triazine, alkoxy-4,6-dithiol-sym-triazine, aryloxy-4,6-dithiol-sym-triazine and 1,3,5-tris(3-mercaptopropyl) isocyanurate; halogen-substituted derivatives of the heterocyclic ring-containing thiols; thiol compounds having at least two mercapto groups and containing sulfur atoms in addition to the mercapto groups such as bis-, tris- or tetra(mercaptoalkylthio)benzene, bis-, tris- or tetra(mercaptoalkylthio)alkane, bis(mercaptoalkyl) disulfide, hydroxyalkylsulfidebis(mercaptopropionate), hydroxyalkylsulfidebis(mercaptoacetate), mercaptoethyl ether bis(mercaptopropionate), 1,4-dithian-2,5-diolbis(mercaptoacetate), thiodiglycolic acid bis(mercaptoalkyl ester), thiodipropionic acid bis(2-mercaptoalkyl ester), 4,4-thiobutyric acid bis(2-mercaptoalkyl ester), 3,4-tluophenedithiol, bismuththiol and 2,5-dimercapto-1,3,4-thiadiazol.

Aliphatic polyamines that are modified by adduction with epoxy resins, acrylonitrile, or (meth)acrylates may also be utilized as curing agents. In addition, various Mannich bases can be used. Aromatic amines wherein the amine groups are directly attached to the aromatic ring may also be used.

The suitability of the curing agent for use herein may be determined by reference to manufacturer specifications or routine experimentation. Manufacturer specifications may be used to determine if the curing agent is an amorphous solid or a crystalline solid at the desired temperatures for mixing with the liquid or solid epoxy. Alternatively, the solid curing agent may be tested using simple crystallography to determine the amorphous or crystalline nature of the solid curing agent and the suitability of the curing agent for mixing with the epoxy resin in either liquid or solid form.

CHAIN EXTENDERS

Chain extenders may be used as an optional component in compositions described herein. Compounds which may be used in embodiments of the curable compositions disclosed herein as a chain extender include any compound having an average of about 2 hydrogen atoms per molecule which are reactive with vicinal epoxy groups. In some embodiments, dihydric and polyhydric phenolic compounds may be used, including, for example, xanthenes, phthaleins and sulfonphthaleins having two phenolic hydroxyl groups.

In some embodiments, chain extenders may include phenolic hydroxyl-containing compounds such as, for example, resorcinol, catechol, hydroquinone, bisphenol A, bisphenol K, bisphenol S, tetramethylbisphenol A, tetratertiarybutylbisphenol A, tetrabromobisphenol A, phenolphthalein, phenolsulfonphthalein, fluorescein, 4,4'-dihydroxybiphenyl, 3,5,3',5'-tetramethyl-4,4'-dihydroxybiphenyl, 3,5,3',5'-tetrabromodihydroxybiphenyl, 3,5,3',5'-tetramethyl-2,6,2',6'-tetrabromo-4,4'-dihydroxybiphenyl, reaction products of dicyclopentadiene or oligomers thereof and a phenolic compound, mixtures thereof and the like. Other suitable chain extenders may include, for example, aniline, toluidine, butylamine, ethanolamine, N,N'-dimethyl phenylene diamine, phthalic acid, adipic acid, fumaric acid, 1,2-dimercapto-4-methylbenzene, diphenyloxide dithiol, 1,4-butanedithiol, mixtures thereof and the like.

In other embodiments, the chain extender may be a nitrogen-containing monomer for example, an isocyanate, and amine or amide. In some embodiments, chain extenders may include epoxy-polyisocyanate compounds as described in WO 99/00451 and U.S. Patent No. 5,112,932, each of which are incorporated herein by reference. Isocyanate compounds useful as chain extenders include, for example MDI, TDI and isomers thereof.

The nitrogen-containing chain extender may also be, for example an amine- or amino amide-containing compound which forms epoxy-terminated amine compounds having two N-H bonds capable of reacting with an epoxy group. Amine-containing chain extenders include, for example, mono-primary amines of the general formula R-NH$_2$ wherein R is alkyl, cycloalkyl or aryl moieties; di-secondary amines of the general formula R--NH--R'--NH--R" wherein R, R' and R" are alkyl, cycloalkyl or aryl moieties; and heterocyclic di-secondary amines wherein one or both of the N atoms is part of a nitrogen containing heterocyclic compound. Examples of amine-containing chain extender may include 2,6-dimethyl cyclohexylamine or 2,6-xylidine (1-amino-2,6-dimethylbenzene). Aromatic diamines may be used in other embodiments, such as , for example, with 3,3'-dichloro-4,4'-diaminodiphenyl methane or 4,4'-methylene-bis(3-chloro-2,6-diethylaniline) and 3.3-dimethyl-4,4'-diaminodiphenyl.

Amino amide-containing compounds useful as chain extenders include, for example, derivatives of carboxylic acid amides as well as derivatives of sulfonic acid amides having additionally one primary or two secondary amino groups. Examples of such compounds include amino-aryl carboxylic acid amides and amino-arylsulfonamides, such as sulfanilamide (4-amino benzenesulfonamide) and anthranilamide(2-aminobenzamide).

The amount of the chain extender may be used, in some embodiments, in an amount from 1 to 40 weight percent, based on the epoxy resin. In other embodiments, the chain extender may be used in an amount ranging from 2 to 35 weight percent; from 3 to 30 weight percent in other embodiments; and from 5 to 25 weight percent in yet other embodiments, each based on the amount of epoxy resin.

SOLVENT

Another optional component, which may be added to the curable epoxy resin composition, is a solvent or a blend of solvents. The solvent used in the epoxy resin composition may be miscible with the other components in the resin composition. The solvent used may be selected from those typically used in making electrical laminates. Examples of suitable solvents employed in the present invention include, for example, ketones, ethers, acetates, aromatic hydrocarbons, cyclohexanone, dimethylformamide, glycol ethers, and combinations thereof.

Solvents for the catalyst and the inhibitor may include polar solvents. Lower alcohols having from 1 to 20 carbon atoms, such as, for example, methanol, provide good solubility and volatility for removal from the resin matrix when prepregs are formed. Other useful solvents may include, for example, N,-methyl-2-pyrrolidone, dimethylsulfoxide, dimethylformamide, tetrahydrofuran, 1, 2-propane diol, ethylene glycol and glycerine.

The total amount of solvent used in the curable epoxy resin composition generally may range from about 1 to about 65 weight percent in some embodiments. In other embodiments, the total amount of solvent may range from 2 to 60 weight percent; from 3 to 50 weight percent in other embodiments; and from 5 to 40 weight percent in yet other embodiments.

CATALYST

In some embodiments, a catalyst may be used to promote the reaction between the epoxy resin component and the curing agent or hardener. Catalysts may include, for example, an imidazole or a tertiary amine. Other catalysts may include tetraalkylphosphonium salts, tetraalkylammonium salts, and the like; benzyl dimethylamine; dimethyl aminomethyl phenol; and amines, such as triethylamine, imadazole derivatives, and the like.

Tertiary amine catalysts are described, for example, in U.S. Patent No. 5,385,990, incorporated herein by reference. Illustrative tertiary amines include methyldiethanolamine, triethanolamine, diethylaminopropylamine, benzyldimethyl amine, m-xylylenedi(dimethylamine), N,N'-dimethylpiperazine, N-methylpyrrolidine, N-methyl hydroxypiperidine, N,N,N'N'-tetramethyldiaminoethane, N,N,N',N',N'-pentamethyldiethylenetriamine, tributyl amine, trimethyl amine, diethyldecyl amine, triethylene diamine, N-methyl morpholine, N,N,N'N'-tetramethyl propane diamine, N-methyl piperidine, N,N'-dimethyl-1,3-(4-piperidino)propane, pyrridine and the like. Other tertiary amines include 1,8-diazobicyclo[5.4.0] undec-7-ene, 1,8-diazabicyclo[2.2.2]octane, 4-dimethylaminopyrridine, 4-(N-pyrrolidino)pyrridine, triethyl amine and 2,4,6-tris(dimethylaminomethyl)phenol.

Catalysts may include imidazole compounds including compounds having one imidazole ring per molecule, such as imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2,4-diamino-6-[2'-undecylimidazolyl-(1)']-ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxymethylimidazole, 2-phenyl-4-methyl-5-hydroxymethylimidazole, 2-phenyl-4-benzyl-5-hydroxymethylimidazole and the like; and compounds containing 2 or more imidazole rings per molecule which are obtained by dehydrating above-named hydroxymethyl-containing imidazole compounds such as 2-phenyl-4,5-dihydroxymethylimidazole, 2-phenyl-4-methyl-5-hydroxymethylimidazole and 2-phenyl-4-benzyl-5-hydroxymethylimidazole; and condensing them by deformaldehyde reaction, e.g., 4,4'-methylene-bis-(2-ethyl-5-methylimidazole), and the like.

In some embodiments, combinations of two or more catalyst may be used. In other embodiments, at least one catalyst used may react at a temperature greater than that of the curing agent used in the composition. For example, where a curing agent initiates reaction at a temperature of 150°C, the catalyst may initiate react at 180°C.

OPTIONAL ADDITIVES

The composition may also include optional additives and fillers conventionally found in epoxy systems. Additives and fillers may include silica, glass, talc, metal powders, titanium dioxide, wetting agents, pigments, coloring agents, mold release agents, coupling agents, flame retardants, ion scavengers, UV stabilizers, flexibilizing agents, and tackifying agents. Additives and fillers may also include fumed silica, aggregates such as glass beads, polytetrafluoroethylene, polyol resins, polyester resins, phenolic resins, graphite, molybdenum disulfide, abrasive pigments, viscosity reducing agents, boron nitride, mica, nucleating agents, and stabilizers, among others. Fillers and modifiers may be preheated to drive off moisture prior to addition to the epoxy resin composition. Additionally, these optional additives may have an effect on the properties of the composition, before and/or after curing, and should be taken into account when formulating the composition and the desired reaction product.

In other embodiments, compositions disclosed herein may include toughening agents. Toughening agents function by forming a secondary phase within the polymer matrix. This secondary phase is rubbery and hence is capable of crack growth arrestment, providing improved impact toughness. Toughening agents may include polysulfones, silicon-containing elastomeric polymers, polysiloxanes, and other rubber toughening agents known in the art.

In other embodiments, compositions disclosed herein may include nanofllers. Nanofillers may include inorganic, organic, or metallic, and may be in the form of powders, whiskers, fibers, plates or films. The nanofillers may be generally any filler or combination of fillers having at least one dimension (length, width, or thickness) from about 0.1 to about 100 nanometers. For example, for powders, the at least one dimension may be characterized as the grain size; for whiskers and fibers, the at least one dimension is the diameter; and for plates and films, the at least one dimension is the thickness. Clays, for example, may be dispersed in an epoxy resin-based matrix, and the clays may be broken down into very thin constituent layers when dispersed in the epoxy resin under shear. Nanofillers may include clays, organo-clays, carbon nanotubes, nanowhiskers (such as SiC), $SiO_2$, elements, anions, or salts of one or more elements selected from the s, p, d, and f groups of the periodic table, metals, metal oxides, and ceramics.

SUBSTRATES

The substrate or object is not subject to particular limitation. As such, substrates may include metals, such as stainless steel, iron, steel, copper, zinc, tin, aluminium, alumite and the like; alloys of such metals, and sheets which are plated with such metals and laminated sheets of such metals. Substrates may also include polymers, glass, and various fibers, such as, for example, carbon/graphite; boron; quartz; aluminum oxide; glass such as E glass, S glass, S-2 GLASS® or C glass; and silicon carbide or silicon carbide fibers containing titanium. Commercially available fibers may include: organic fibers, such as KEVLAR; aluminum oxide-containing fibers, such as NEXTEL fibers from 3M; silicon carbide fibers, such as NICALON from Nippon Carbon; and silicon carbide fibers containing titanium, such as TYRRANO from Ube. In some embodiments, the substrate may be coated with a compatibilizer to improve the adhesion of the curable or cured composition to the substrate.

In selected embodiments, the curable compositions described herein may be used as coatings for substrates that cannot tolerate high temperatures. In other embodiments, the curable compositions may be used with substrates whose dimensions and shape make it difficult to apply homogeneous heating, such as windmill blades, for example.

COMPOSITES AND COATED STRUCTURES

The curable compositions and the composites described herein may be produced conventionally, accounting for the alteration in the epoxy resin compositions before they are cured as described above, including the stoichiometric excess of epoxy resin and the temperature stable catalyst. In some embodiments, composites may be formed by curing the curable compositions disclosed herein. In other embodiments, composites may be formed by applying a curable epoxy resin composition to a substrate or a reinforcing material, such as by impregnating or coating the substrate or reinforcing material, and curing the curable composition.

The above described curable compositions may be in the form of a powder, slurry, or a liquid. After a curable composition has been produced, as described above, it may be disposed on, in, or between the above described substrates, before, during, or after cure of the curable composition.

For example, a composite may be formed by coating a substrate with a curable composition. Coating may be performed by various procedures, including spray coating, curtain flow coating, coating with a roll coater or a gravure coater, brush coating, and dipping or immersion coating.

In various embodiments, the substrate may be monolayer or multi-layer. For example, the substrate may be a composite of two alloys, a multi-layered polymeric article, and a metal-coated polymer, among others, for example. In other various embodiments, one or more layers of the curable composition may be disposed on a substrate. For example, a substrate coated with a polyurethane-rich curable composition as described herein may additionally be coated with an epoxy resin-rich curable composition. Other multi-layer composites, formed by various combinations of substrate layers and curable composition layers are also envisaged herein.

In some embodiments, the heating of the curable composition may be localized, such as to avoid overheating of a temperature-sensitive substrate, for example. In other embodiments, the heating may include heating the substrate and the curable composition.

In one embodiment, the curable compositions, composites, and coated structures described above may be cured by heating the curable composition to a temperature sufficient to initiate reaction of the curing agent. During the initial cure, secondary hydroxyl groups may be formed as the curing agent reacts. Following at least martial reaction of the curing agent and epoxy, the temperature of the curable composition, composite, or coated structure may be increased to a temperature sufficient for the catalyst to catalyze the reaction of the secondary hydroxyl groups with the excess epoxy resin. In this manner, the stoichiometric excess of epoxy may be reacted without significant degradation of the epoxy thermoset.

In some embodiments, the additional crosslinking that forms during the reaction of the excess epoxy may decrease the bulk density of the epoxy thermoset. In other embodiments, the additional crosslinking may increase the fracture toughness of the epoxy thermoset. In yet other embodiments, the reaction of the stoichiometric excess of epoxy may avoid the deleterious effects that unreacted epoxy may have on the thermoset composition, as described in the prior art, resulting in a thermoset composition having one or more of adequate or improved heat resistance, solvent resistance, low moisture absorption, reflow reliability, electrical properties, glass transition temperature, and adhesion, among others.

Curing of the curable compositions disclosed herein may require a temperature of at least about 30°C, up to about 250°C, for periods of minutes up to hours, depending on the epoxy resin, curing agent, and catalyst, if used. In other embodiments, curing may occur at a temperature of at least 100°C, for periods of minutes up to hours. Post-treatments may be used as well, such post-treatments ordinarily being at temperatures between about 100°C and 250°C.

In some embodiments, curing may be staged to prevent exotherms. Staging, for example, includes curing for a period of time at a temperature followed by curing for a period of time at a higher temperature. Staged curing may include two or more curing stages, and may commence at temperatures below about 180°C in some embodiments, and below about 150°C in other embodiments.

In some embodiments, curing temperatures may range from a lower limit of 30°C, 40°C, 50°C, 60°C, 70°C, 80°C, 90°C, 100°C, 110°C, 120°C, 130°C, 140°C, 150°C, 160°C, 170°C, or 180°C to an upper limit of 250°C, 240°C, 230°C, 220°C, 210°C, 200°C, 190°C, 180°C, 170°C, 160°C, where the range may be from any lower limit to any upper limit.

The curable compositions disclosed herein may be useful in composites containing high strength filaments or fibers such as carbon (graphite), glass, boron, and the like. Composites may contain from about 30% to about 70%, in some embodiments, and from 40% to 70% in other embodiments, of these fibers based on the total volume of the composite.

Fiber reinforced composites, for example, may be formed by hot melt prepregging. The prepregging method is characterized by impregnating bands or fabrics of continuous fiber with a thermosetting epoxy resin composition as described herein in molten form to yield a prepreg, which is laid up and cured to provide a composite of fiber and thermoset resin.

Other processing techniques can be used to form composites containing the epoxy-based compositions disclosed herein. For example, filament winding, solvent prepregging, and pultrusion are typical processing techniques in which the uncured epoxy resin may be used. Moreover, fibers in the form of bundles may be coated with the uncured epoxy resin composition, laid up as by filament winding, and cured to form a composite.

The curable compositions and composites described herein may be useful as adhesives, structural and electrical laminates, coatings, castings, structures for the aerospace industry, as circuit boards and the like for the electronics industry, windmill blades, as well as for the formation of skis, ski poles, fishing rods, and other outdoor sports equipment. The epoxy compositions disclosed herein may also be used in electrical varnishes, encapsulants, semiconductors, general molding powders, filament wound pipe, storage tanks, liners for pumps, and corrosion resistant coatings, among others.

EXAMPLES

Epoxy networks are prepared according to embodiments disclosed herein (Samples 1-12) and are compared to phenolic-only epoxy networks where any excess epoxy is not reacted (Comparative Samples 1-4) and an epoxy only sample (Comparative Sample 5). Sample preparation is described generally below, with details for each sample formulation given in Table 1.

Samples 1-12

The specified amounts, of diglycidyl ether of bisphenol-A (D.E.R.™ 332 epoxy resin, available from The Dow Chemical Co., Midland, Michigan, referred to as "BADGE" in Table 1) and 1,1,1-tris-(4-hydroxyphenyl)ethane ("THPE", available from Aldrich), are combined as shown in Table 1 and heated to 165°C in a 1 liter 3-necked round bottomed flask to result in a clear, homogeneous liquid. Bisphenol-A ("BA", PARABIS grade, available from The Dow Chemical Company, Midland, Michigan) is then added to the flask, and the mixture is further heated to 180°C to again form a clear, homogenous liquid. The mixture is then cooled to 80°C prior to addition of the 1-benzyl-2-methylimidazole catalyst (CUREZOL 1B2MZ, available from Air Products and Chemicals). The mixture is degassed by centrifugation at 3000 rpm for 3 minutes using centrifuge bottles and holders pre-heated to 70°C to maintain the fluidity of the mixture. A 1/8-inch (3.2mm) thick plaque is then cast in a mold assembled from 1/2-inch (12.7mm) aluminum plates lined with two duo-foil aluminum sheets (Insulectro Distributors, Dallas, TX) separated by a 1/8-inch (3.2mm) U-shaped aluminum spacer and a length of 3/16-inch (4.8mm) tubing. The plaque is cured at 200°C for 2 hours. The assembly is then allowed to cool slowly to room temperature prior to removal of the cured plaque from the mold.

Comparative Samples 1-4

The specified amounts of diglycidyl ether of bisphenol-A (D.E.R.™ 332 epoxy resin, available from The Dow Chemical Co., Midland, Michigan) and 1,1,1-tris-(4-hydroxyphenyl)ethane (THPE, available from Aldrich) are combined and heated to 165°C in a 1 liter 3-necked round bottomed flask to result in a clear, homogeneous liquid. Bisphenol-A (BA, PARABIS grade, available from The Dow Chemical Company, Midland, Michigan) is then added to the flask, and the mixture is further heated to 180°C to again form a clear, homogenous liquid. The mixture is then cooled to 120°C prior to addition of the specified amount of A-1 catalyst (70% w/w ethyltriphenylphosphonium acetate-acetic acid complex in methanol, available from Morton Chemical, Garden Grove, California). The mixture is degassed by vacuum for 3 minutes. A 1/8-inch (3.2mm) thick plaque is then cast in a mold assembled from 1/2-inch (12.7 mm) aluminum plates lined with two duo-foil aluminum sheets (Insulectro Distributors, Dallas, TX) separated by a 1/8-inch (3.2mm) U-shaped aluminum spacer and a length of 3/16-inch (4.8mm) tubing. The plaque is cured at 200°C for 2 hours. The assembly is then allowed to cool slowly to room temperature prior to removal of the cured plaque from the mold.

Comparative Sample 5

A plaque containing only epoxy resin and the 1B2MZ catalyst is prepared according to the process described above with respect to Samples 1-12. The resulting product is then post-cured at 250°C for 2 hours.

Table 1

| | Excess Epoxy (equivalent %) | BADGE (g) | BA (g) | THPE (g) | BA/THPE Ratio | Catalyst Type | Catalyst Amount |
|---|---|---|---|---|---|---|---|
| Comparative Sample 1 | 4 (not reacted) | 289.0 | 70.0 | 100.3 | --- | A-1 | 0.1 mL |
| Comparative Sample 2 | 4 (not reacted) | 289.2 | 116.0 | 59.1 | --- | A-1 | 0.1 mL |
| Comparative Sample 3 | 4 (not reacted) | 288.9 | 146.0 | 32.3 | --- | A-1 | 0.1 mL |
| Comparative Sample 4 | 4 (not reacted) | 289.7 | 163.3 | 16.9 | --- | A-1 | 0.1 mL |
| Sample 1 | 5 | 250.5 | 100.0 | 51.0 | 1.75 | 1B2MZ | 5.0 g |
| Sample 2 | 10 | 254.4 | 96.5 | 49.4 | 1.75 | 1 B2MZ | 5.2 g |
| Sample 3 | 20 | 262.6 | 91.2 | 46.6 | 1.75 | 1B2MZ | 5.4 g |
| Sample 4 | 40 | 276.2 | 82.2 | 42.0 | 1.75 | 1B2MZ | 5.6 g |
| Sample 5 | 62 | 289.7 | 74.8 | 38.2 | 1.75 | 1B2MZ | 4.7 g |
| Sample 6 | 104 | 310.5 | 63.4 | 32.4 | 1.75 | 1B2MZ | 6.2 g |
| Sample 7 | 5 | 249.1 | 124.0 | 27.8 | 4.0 | 1B2MZ | 5.2 g |
| Sample 8 | 11 | 254.3 | 120.4 | 27.0 | 4.0 | 1B2MZ | 5.0 g |
| Sample 9 | 20 | 261.0 | 113.9 | 25.5 | 4.0 | 1B2MZ | 5.4 g |
| Sample 10 | 41 | 276.1 | 102.7 | 23.0 | 4.0 | 1B2MZ | 5.7 g |
| Sample 11 | 60 | 286.1 | 93.6 | 21.0 | 4.0 | 1B2MZ | 5.8 g |
| Sample 12 | 100 | 303.8 | 79.4 | 17.8 | 4.0 | 1B2MZ | 6.1 g |
| Comparative Sample 5 | --- | 407.4 | --- | --- | --- | 1B2MZ | 8.3 g |

Sample Testing

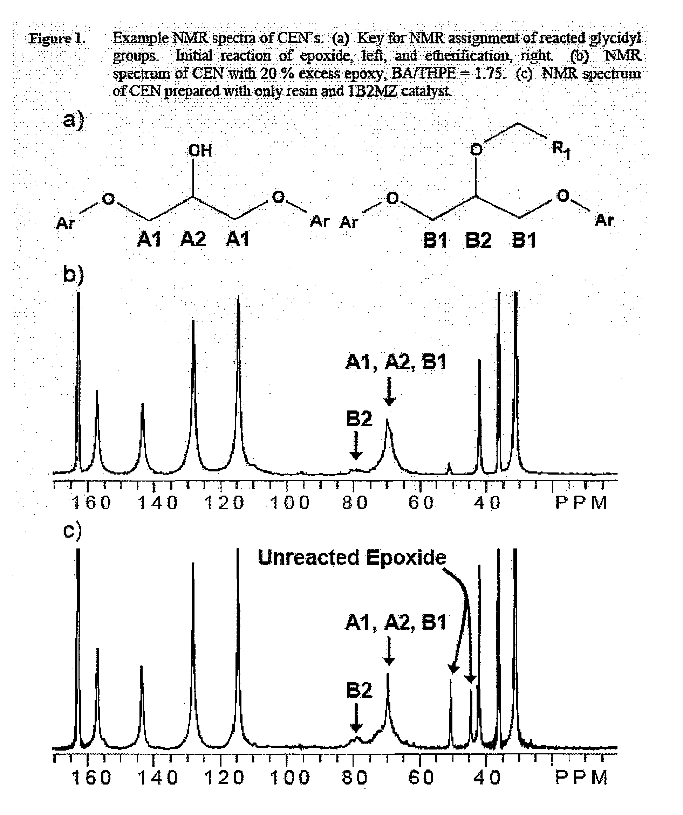

The above described Samples and Comparative Samples are analyzed for the degree of epoxy etherification, crosslink density, thermal and mechanical characterization (including differential scanning calorimetry (DSC), thermomechanical analysis (TMA), dynamic mechanical thermal analysis (DMTA), thermogravimetric analysis (TGA), and mechanical testing (fracture toughness and tensile properties)). A description of each test type and the results are described below and presented in Tables 2-4 and Figures 1-11.

The degree of epoxy etherification in the cured plaques is measured by single-pulse magic angle spinning (MAS) $^{13}$C NMR. Experiments are performed on a Bruker Avance 400 spectrometer (Bruker BioSpin, Billerica, MA) operating at a resonance frequency of 100.56 MHz with a 7 mm MAS-II probe. Samples and Comparative Samples are ground for analysis and swollen in DMF (approximately 2:1 solvent:sample by mass) to enhance resolution. The MAS speed is 4800 Hz.

Differential scanning calorimetry (DSC) experiments are performed on a TA Instruments (New Castle, DE) Q-1000 Calorimeter. Two scans from an equilibrated temperature of 35°C to 275°C at 10°C/min under nitrogen with an interim cool-down at 10°C/min are performed for each sample in an open aluminum pan. Reported glass transition temperature ($T_g$) values were measured from the inflection point of the heat capacity curve on the second scan.

Thermomechanical analysis (TMA) experiments are performed on a TA Instruments Q-400 with a micro-expansion probe. Samples are dried in a desiccator overnight prior to analysis, and the temperature is ramped twice to 275°C at 10°C/min. $T_g$ and coefficients of thermal expansion (CTE's) are calculated from the second scan.

Dynamic mechanical thermal analysis (DMTA) was performed on an ARES LS rheometer (Rheometric Scientific, Piscataway, NJ) equipped with an environmental controlled oven chamber and rectangular plate fixtures. For 1.75 inch (44.4mm) by 0.5 inch (12.7mm) by 0.125 inch (3.2mm) samples, a 0.1% strain is applied at 1 Hz while ramping to 250°C at 3°C/min.

Thermogravimetric analyses (TGA) experiments are performed on a TA Instruments Q-50. Dry samples are analyzed by a ramp from room temperature to 600°C at 10°C/min using nitrogen as a purge gas. The degradation temperatures ($T_d$) are determined both at the intersection of the tangents of the weight/temperature curve drawn prior to the degradation and at the temperature at which 5 percent of the starting mass was lost.

Fracture toughness testing of the samples is performed in accordance with ASTM D-5045. The samples are cut using a water-jet cutter to minimize cracking and residual stress. A minimum of five analyses are performed and averaged.

Tensile testing is performed on selected samples according to ASTM D638 with the exception of sample size. For these tests, the nominally 1/8-inch (3.2mm) thick thermoset plaques were cut into 0.5 inch (12.7mm) by 2.75 inch (70mm) pieces with a 1/8-inch (3.2mm) gauge width.

Results

Table 2.

| | Excess Epoxy (equivalent %) | NMR Branching Level (%) | $M_c$ - Direct Calculation (100% Epoxide Conversion) (g/mole) | $1/M_c$ (mole/kg) |
|---|---|---|---|---|
| Comparative Sample 1 | 4 (not reacted) | --- | 934 (stoichiometric conversion) | 1.07 |
| Comparative Sample 2 | 4 (not reacted) | --- | 1603 (stoichiometric conversion) | 0.62 |
| Comparative Sample 3 | 4 (not reacted) | | 2951 (stoichiometric conversion) | 0.34 |
| Comparative Sample 4 | 4 (not reacted) | --- | 5672 (stoichiometric conversion) | 0.18 |
| Sample 1 | 5 | 3.3 | 1168 | 0.86 |
| Sample 2 | 10 | 10.6 | 912 | 1.1 |
| Sample 3 | 20 | 15.0 | 782 | 1.28 |
| Sample 4 | 40 | 30.8 | 451 | 2.22 |
| Sample 5 | 62 | 49.8 | 354 | 2.82 |
| Sample 6 | 104 | 49.8 | 266 | 3.76 |
| Sample 7 | 5 | 1.7 | 1648 | 0.61 |

(continued)

| | Excess Epoxy (equivalent %) | NMR Branching Level (%) | $M_c$ - Direct Calculation (100% Epoxide Conversion) (g/mole) | $1/M_c$ (mole/kg) |
|---|---|---|---|---|
| Sample 8 | 11 | 8.7 | 1170 | 0.85 |
| Sample 9 | 20 | 19.0 | 799 | 1.25 |
| Sample 10 | 41 | 32.6 | 500 | 2.00 |
| Sample 11 | 60 | 43.6 | 389 | 2.57 |
| Sample 12 | 100 | 63.4 | 286 | 3.50 |
| Comparative Sample 5 | --- | 49.9 | 116 | 8.62 |

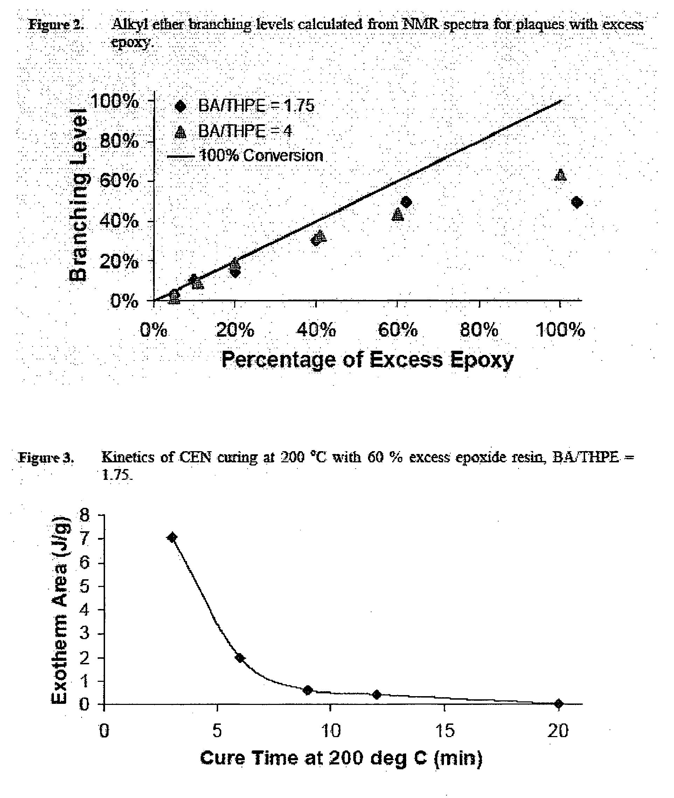

Unreacted epoxy is not detected for any of Samples 1-12, indicating near complete curing (see Table 2 and Figure 2). However, samples having higher levels of excess epoxy do not show correspondingly higher degrees of branching. Rather, the NMR analysis is not as sensitive to the increase in branching at higher levels of excess epoxy.

To confirm that unreacted epoxides would be detected if present, a plaque containing only epoxy resin and the 1B2MZ catalyst is prepared (Comparative Sample 5). Incomplete cure of Comparative Sample 5 is confirmed by the presence of a large exotherm peak in the initial DSC scan. The NMR spectra (Figure 1c) contains the expected resonances at 44.4 and 50.6 ppm corresponding to the two epoxide-ring carbons, confirming that unreacted epoxide groups would be detected by the NMR method if present. Following a two-hour post-cure at 250°C, these two resonances disappear from the NMR spectrum (not shown) and the exotherm is no longer detected by DSC.

Values for the crosslink densities of the networks with excess epoxy resin are calculated directly from the prepared stoichiometries for the phenolic-only samples since with the A-1 catalyst only stoichiometric reaction with the epoxy and phenolics is expected. For the samples containing excess epoxy, the crosslink densities are calculated by using 100 percent conversion of the excess epoxy, as observed by NMR analysis. Complete conversion of the BA extender and THPE hardener was also assumed, as the reaction between an epoxide and a phenolic group is much faster than the etherification reaction, essentially all the phenolics would be consumed prior to any appreciable etherification. As such, the crosslink density, X, is given by:

$$(1) \qquad X = (n_{THPE} + n_{EE}(C_{EE}))/m$$

where $n_{THPE}$ is the number of moles of THPE, $n_{EE}$ is the number of moles of excess epoxide groups (since each excess epoxide group can introduce a crosslink), $C_{EE}$ is the conversion of the excess epoxide (zero for the phenolic-only samples and 100 percent for the samples with excess epoxy), and m is the total mass of the network. The average molecular weight per crosslink, $M_{pc}$, is simply the inverse of the crosslink density:

$$(2) \qquad M_{pc} = 1/X$$

Finally, the average molecular weight between crosslinks, $M_c$, is given by the relationship:

$$(3) \qquad M_c = (2/f_{avg})M_{pc}$$

where $f_{avg}$ is the average functionality of the crosslinking groups. Since each THPE hardener molecule and each reacted excess epoxide group both introduce a single three-way branch point into the network, each has a functionality of three. As a result, $f_{avg} = 3$. Calculated values of $M_c$ for the samples prepared are listed in Table 2.

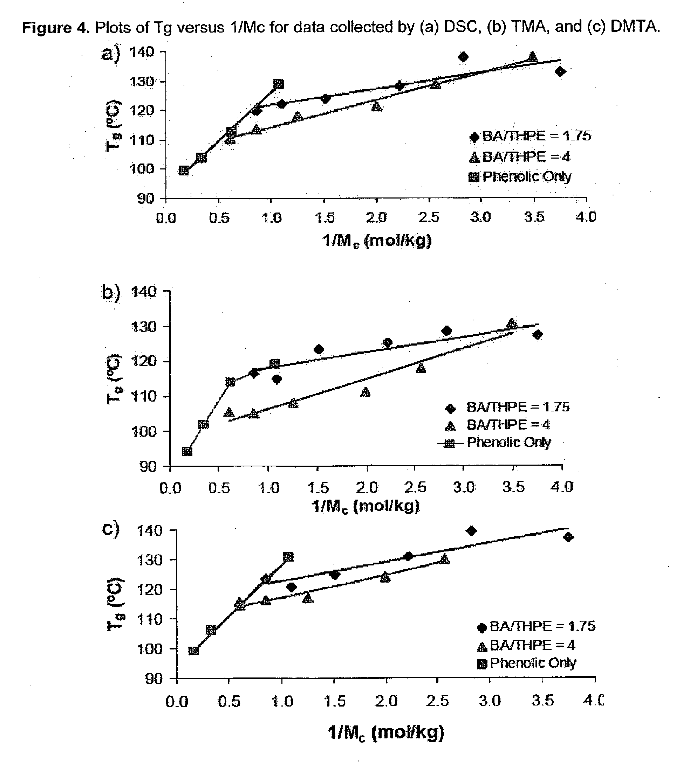

Results of the thermal and thermomechanical analyses are listed in Table 3. The glass transition tempratures ($T_g$'s) for these materials are measured using three different techniques: DSC, TMA, and DMTA (presented in Table 3 as DSC $T_g$, TMA $T_g$, and DMTA $T_g$, respectively). Since the results are very consistent (Figure 4) only the DSC results will be discussed in detail. $T_g$ values obtained from the second DSC scan are plotted against $1/M_c$ in Figure 4a. With the exception of the network containing only epoxy resin, no exotherms were observed in any of the DSC scans, indicating complete cure, consistent with the absence of unreacted epoxides in the NMR spectra. Also presented in Table 3 are thermomechanical analysis results including the coefficients of thermal expansion in the glassy region and in the rubbery region ($CTE_g$ and $CTE_r$, respectively), storage modulus in the rubbery region as measured during DMTA analysis ($G'_r$), and degradation temperatures as measured using thermogravimetric analysis ("TGA $T_d$, ext" measured at the intersection of the tangents of the weight/temperature curve drawn prior to the degradation, and "TGA $T_d$, 5% weight loss" measured at the temperature at which 5 percent of the starting mass was lost). Solids residue (TGA residue) represents the amount of non-volatile material in the sample at a final temperature of 600°C.

Table 3.

| | DSC $T_g$ | TMA $T_g$ | TMA $CTE_g$ | TMA $CTE_r$ | DMTA $T_g$ | $G'_r$ at $T_g$+40°C | TGA $T_d$, ext | TGA $T_d$, 5% weight loss | TGA Residue |
|---|---|---|---|---|---|---|---|---|---|
| | (°C) | (°C) | (ppm/°C) | (ppm/°C) | (°C) | (MPa) | (°C) | (°C) | (%) |
| Comparative Sample 1 | 129 | 119 | 73 | 226 | 131 | 5.40 | 416 | 410 | 10.3 |
| Comparative Sample 2 | 113 | 114 | 72 | 243 | 114 | 2.75 | 415 | 406 | 7.9 |
| Comparative Sample 3 | 104 | 102 | 69 | 228 | 106 | 1.34 | 412 | 399 | 7.7 |
| Comparative Sample 4 | 100 | 94 | 53 | 392 | 94 | 0.12 | 412 | 401 | 7.5 |
| Sample 1 | 120 | 117 | 73 | 223 | 124 | 5.76 | 416 | 408 | 8.2 |
| Sample 2 | 122 | 115 | 77 | 212 | 121 | 4.85 | 420 | 411 | 7.8 |
| Sample 3 | 124 | 123 | 70 | 206 | 125 | 6.89 | 420 | 412 | 8.5 |
| Sample 4 | 128 | 125 | 73 | 202 | 131 | 10-7 | 420 | 409 | 8.1 |
| Sample 5 | 138 | 129 | 74 | 198 | 140 | 15.1 | 422 | 414 | 8.2 |
| Sample 6 | 133 | 127 | 84 | 212 | 137 | 12.8 | 422 | 411 | 7.7 |
| Sample 7 | 110 | 106 | 75 | 235 | 116 | 3.78 | 427 | 416 | 6.5 |
| Sample 8 | 113 | 105 | 75 | 232 | 116 | 4.27 | 426 | 416 | 6.6 |
| Sample 9 | 118 | 108 | 72 | 219 | 117 | 5.00 | 419 | 409 | 6.1 |
| Sample 10 | 121 | 111 | 77 | 221 | 124 | 8.11 | 419 | 409 | 7.4 |
| Sample 11 | 129 | 118 | 78 | 219 | 130 | 11.1 | 419 | 410 | 6.5 |
| Sample 12 | 138 | 131 | 84 | 213 | 141 | 16.1 | 422 | 413 | 8.0 |
| Comparative Sample 5 | 120 | 117 | 78 | 218 | 128 | 13.8 | 404 | 377 | 11.0 |

For the samples from the phenolic-only series, $T_g$ increases linearly with increasing crosslink density (increasing $1/M_c$). While the samples containing excess epoxy exhibit the same general behavior, the slopes of the lines in Figure 4 for the two series with varying amounts of excess epoxy (5.4 and 9.2 kg°C/mol for the series with varying amounts of excess epoxy with extender/hardener ratios of 4 and 1.75, respectively, based on the DSC measurements) are both significantly lower than the slope of the series with varying extender/hardener ratios (33.0 kg°C/mol). Since the THPE hardener and the excess epoxide groups both have an effective functionality of 3, the $(f_{avg} - 2) / f_{avg}$ term will have the same value in all cases.

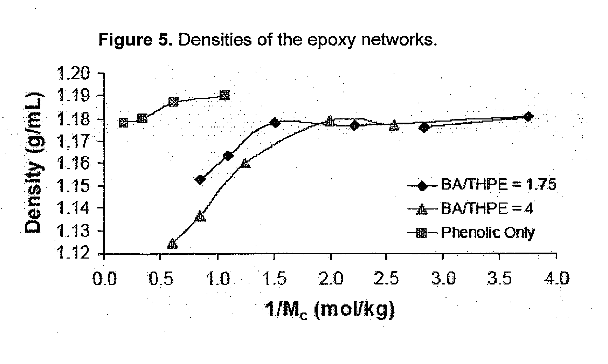

Density measurements of the networks listed in Table 4 indicate that within each series, density decreases with increasing $M_c$ as would be expected since the added crosslinks create steric hindrances to more efficient packing (Figure 5). In the networks with significant degrees of epoxy etherification, however, the ultimate density reached for the lowest-$M_c$ materials is slightly lower than that for the networks where the extender/hardener ratio is used to vary the crosslink density, and for a given $M_c$, there can be substantial differences in density, especially when $M_c$ is high. Furthermore, an experiment with one of the less dense samples, Sample 7, yielded preliminary evidence that these materials can be densified under pressure at temperatures near the $T_g$. In this case, a pressure of 80 psi was applied to the 1/8 inch plaque at 120°C for 1 hour resulted in a material with a density nearer that of the phenolic-only samples, 1.190 g/mL. An identical experiment on the most dense sample in this series, Sample 11, resulted in only a very small increase in density, from 1.177 to 1.185 g/mL.

Table 4

| | Density (g/ml) | Fracture Toughness $K_{1c}$ (MPa m$^{1/2}$) | Tensile Modulus (MPa) | Yield Strength (MPa) |
|---|---|---|---|---|
| Comparative Sample 1 | 1.190 | 0.57 | 2336 | 75.4 |
| Comparative Sample 2 | 1.187 | 0.96 | 2452 | 70.4 |
| Comparative Sample 3 | 1.180 | 1.04 | 2449 | 69.9 |
| Comparative Sample 4 | 1.178 | 1.17 | 2729 | 71.1 |
| Sample 1 | 1.153 | 1.35 | --- | --- |
| Sample 2 | 1.164 | 1.16 | --- | --- |
| Sample 3 | 1.178 | 1.13 | --- | --- |
| Sample 4 | 1.177 | 1.28 | --- | --- |
| Sample 5 | 1.176 | 1.20 | --- | --- |
| Sample 6 | 1.181 | 1.17 | --- | --- |
| Sample 7 | 1.124 | 1.70 | 3378 | 72.4 |
| Sample 8 | 1.137 | 1.38 | --- | --- |
| Sample 9 | 1.160 | 1.19 | --- | --- |
| Sample 10 | 1.179 | 1.17 | --- | --- |
| Sample 11 | 1.177 | 1.46 | 3261 | 77.9 |
| Sample 12 | 1.172 | 1.03 | --- | --- |
| Comparative Sample 5 | 1.180 | 0.57 | --- | --- |

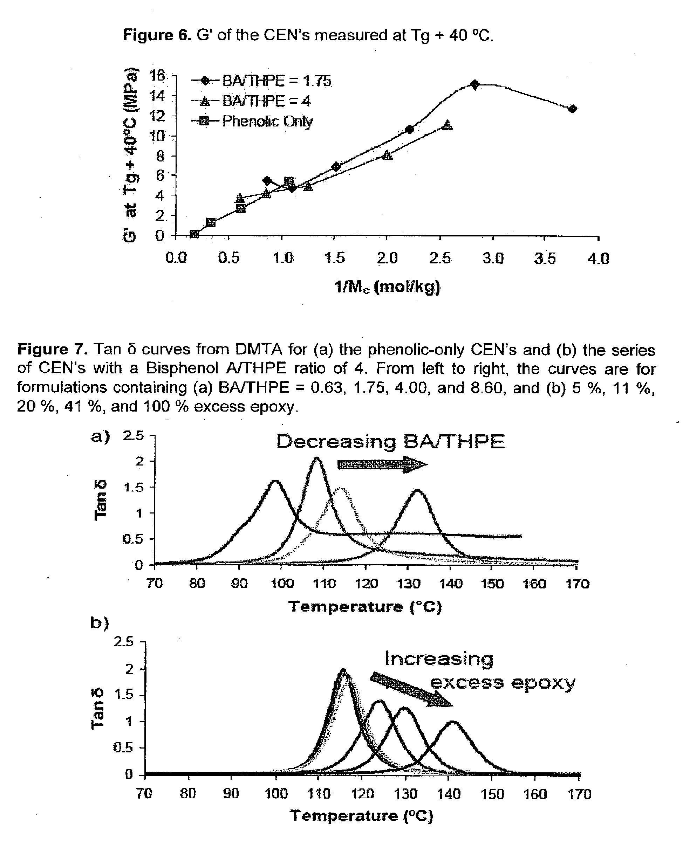

When plotted against $1/M_c$, the storage modulus in the rubbery region, $G'_r$, measured by DMTA falls on the same line for nearly every material evaluated, with the modulus increasing steadily with $1/M_c$ (Figure 6). This behavior is consistent with an increase in material stiffness above $T_g$ as the crosslink density increases. The only notable discrepancies are for the Samples with the least amount of excess epoxy. For these materials with formulations nearly identical except for the catalyst and the initial casting temperature, a subtle shift in $M_c$ due to enhanced etherification with the imidazole catalyst has already been noted. This shift, however, was accompanied by a disproportionately large increase in $G'_r$. In these samples which lack some of the rigidity of the samples with higher crosslink densities, small changes in the extent of etherification could have a significant impact on the inter-chain interactions. Specifically, the presence of some etherified linkages could lead to stronger interactions, increasing the modulus for these materials. Lastly, the phenolic-cured formulations exhibited damping above the $T_g$ which increased in magnitude with increasing $M_c$, possibly due to pendant chains resulting from the small amounts of excess epoxy in these samples which would have remained unreacted in the higher $M_c$ samples. The imidazole cured samples prepared with excess epoxy showed no damping in this region, an additional indicator of the high conversion of the excess epoxy present.

Examination of the tan $\delta$ curves from the DMTA experiments reveals one final point of interest concerning the $T_g$'s of these materials. For the phenolic-only samples, the breadth of the tan $\delta$ curves remained relatively constant across the range of $M_c$'s evaluated (Figure 7a). With the excess epoxy samples, however, as the amount of excess epoxy in the formulation increased, the breadth of the $T_g$ transition increased as well, although the area under the tan $\delta$ curves remained constant. An example of this is shown in Figure 7b for one series. This behavior was not seen when $M_c$ was varied by altering the extender/hardener ratio because of post-Tg damping as $M_c$ decreases. The orderly increase in the width of tan $\delta$ in the imidazole catalyzed samples likely indicates a broading of the distribution of chain lengths between crosslinks with increasing crosslink density.

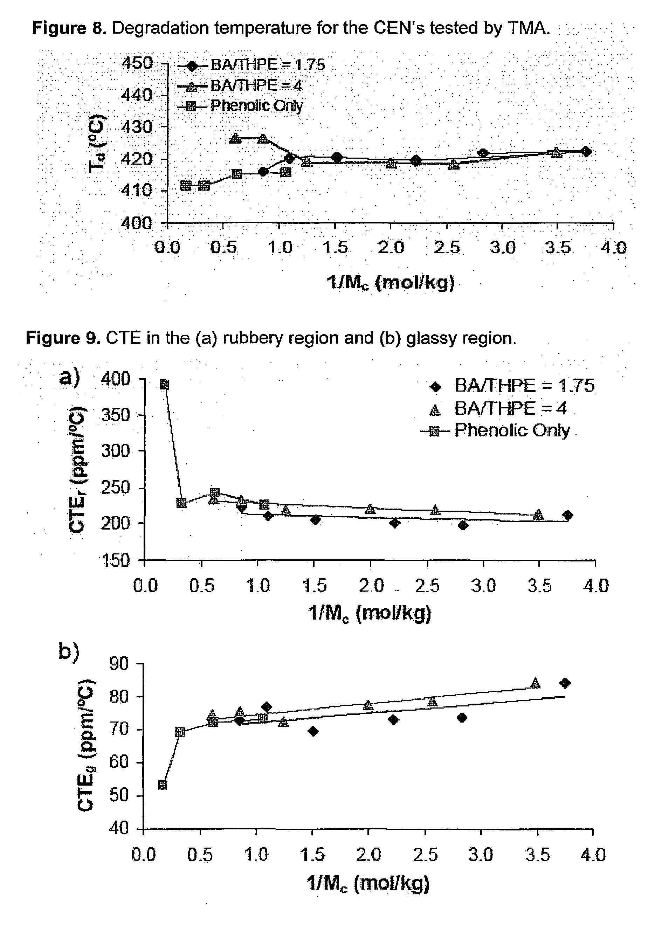

$T_d$ values for the samples were consistently well above 400°C (Figure 8). Among the materials with higher $M_c$ values, some small differences in $T_d$ were observed between the samples made with and without excess epoxy crosslinking, but the variations were very small with a maximum difference of less than 4 percent.

With only one exception, for all of the networks tested the CTE for the materials in the glassy region (T < Tg, $CTE_g$) as measured by TMA demonstrated a very slight decrease with increasing $M_c$, ranging from 69 to 78 ppm/°C with no apparent trends (Figure 9). The exception lay in the highest $M_c$ sample from the phenolic-only series. This sample had a $M_c$ significantly higher than any other in this study and exhibited a large drop in its $CTE_g$. In the rubbery region (T > $T_g$, $CTE_r$), aside from the same excepted network, the $CTE_r$ values tended to increase slightly with increasing $M_c$, ranging from 198 to 243 ppm/°C. In this case, though, the high $M_c$ network had a much higher $CTE_r$ than the other networks.

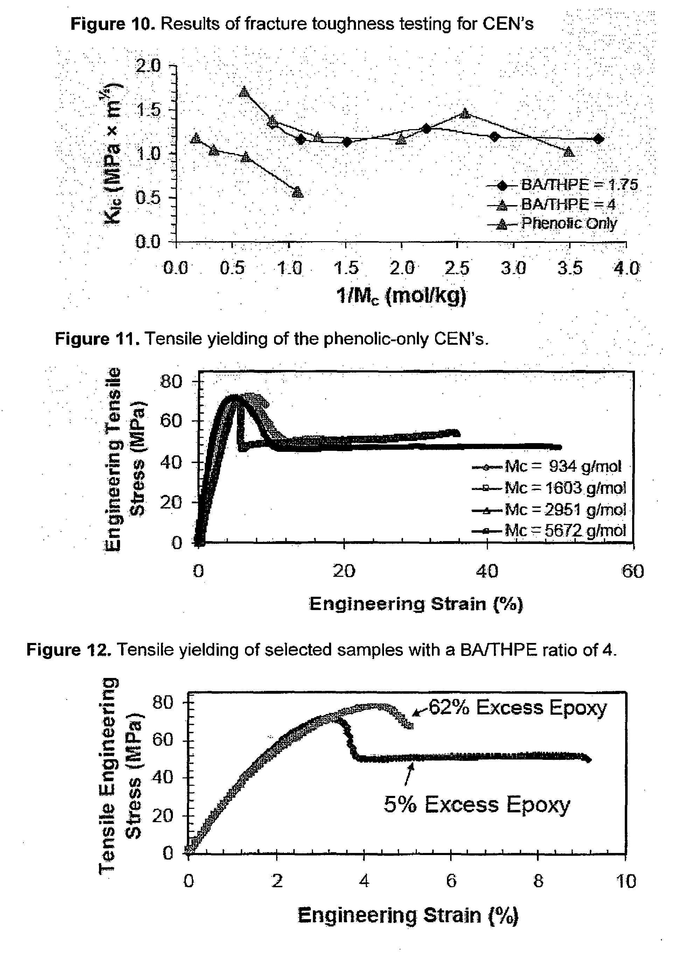

Fracture toughness testing (in accordance with ASTM D-5045) of the samples revealed one of the more interesting properties of the materials with epoxy etherification (Figure 10). For the samples with $M_c$ greater than around 1000 mol/g, the same trend was observed both with and without etherification: as the crosslink density increases, $K_{1c}$ decreases due to the increasingly brittle nature of the network. The samples in this range with excess epoxy, though, had significantly greater fracture toughness values than the samples without etherification. We speculate that this could be a result of the increased free volume in these materials as indicated by their low densities, allowing more space for chain motions to accommodate the applied load. For the lower $M_c$ networks, the $K_{1c}$ values level at a relatively high value near 1.0 MPa·m$^{1/2}$. Closer inspection of both the fracture data and the broken pieces themselves revealed evidence for some degree of ductile yielding prior to fracture. Typically, materials with high crosslink densities such as these are extremely brittle, having low values of $K_{1c}$. With these materials, this embrittlement was not observed.

To further probe the apparent improved ductility of these epoxy thermosets, tensile testing was performed on selected samples - the phenolic-only samples and the samples at either extreme of the $M_c$ range for the series with an extender/hardener ratio of 4. For the phenolic-only samples, the tensile modulus demonstrated an unexpected slight increase with increasing $M_c$, the opposite of the trend typically observed for glassy thermosets. The stress-strain curves for these samples are shown in Figure 11. One likely explanation is that as $M_c$ increases in these materials, secondary interactions such as inter-chain hydrogen bonding, dipolar interactions, and entanglement of the thermoset backbone become stronger. The stress-strain curves for the excess epoxy samples are shown in Figure 12. For the high $M_c$ network (with 5 percent excess epoxy in the formulation) the material exhibited typical yielding behavior under tension and a tensile modulus greater than any of the phenolic-only materials. For the network with a $M_c$ of 389 (60 percent excess epoxy), the expected behavior would be for the material to fracture well prior to the yield point. A yield point was observed, however, and a neck had just begun to form before fracture. This material also had a modulus greater than the phenolic-only samples as well as a higher yield strength. This behavior, unexpected in a network so tightly crosslinked, confirms the ductility observed in the fracture toughness analyses. With crosslinks due to a combination of hardener and etherified resin, the toughness of the materials is significantly higher than materials with only phenolic curing and there is a degree of ductility at low $M_c$ completely absent in the phenolic-cured networks.

Lastly, a sample was made similarly containing only the epoxy resin and catalyst, no hardener or extender. Following the initial 2 hour cure at 200°C, a solid, but incompletely cured network formed (based on the presence of a large exotherm in the first DSC scan and resonances due to unreacted epoxide groups in the NMR spectra). Nearly complete conversion of the epoxy was obtained through a post-cure for 2 hours at 250°C. (The DSC exotherm and NMR resonances due to the unreacted epoxides both disappeared.) The measured properties for this sample are given in Tables 2, 3, and 4. The key result was the very low $K_{1c}$ (0.57 MPa·m$^{1/2}$) despite a reasonably high $T_g$ (120°C by DSC) for a resin cured completely by homopolymerization. The thermal stability of the epoxy-only sample is also significantly reduced as shown by its lower $T_d$. The samples cured by a combination of reaction with phenolics, which include a co-reactive curing agent, and etherification have properties very different than materials cured by either reaction alone.

Samples 13-17

Samples 13-17 are epoxy thermosets made from an epoxy resin and a co-reactive curing agent. These samples are prepared as described below, and compared to an epoxy resin prepared using a balanced stoichiometry.

The specified amounts of diglycidyl ether of bisphenol-A (D.E.R. 332, available from The Dow Chemical Co., Midland, Michigan) (See Table 5) is added to a 1-liter three-necked round bottomed flask fitted with a mechanical stirrer, a nitrogen/vacuum inlet, and a heating mantle controlled by a rheostat. The resin is warmed to 60°C and is then degassed with vacuum. The resin is then allowed to cool to 50°C and 1,2-diaminoethane (EDA, available from The Dow Chemical Co., Midland, Michigan) and 1-benzyl-2-methylimidazole catalyst (CUREZOL 1B2MZ, available from Air Products and Chemical) catalyst (if used) are added. The mixture is stirred slowly for 10 minutes while degassing under vacuum. Then the mixture is poured into a mold assembly pre-heated at 60°C and cured in an oven at 60°C for 3 hours and 170°C for 2 hours. The specified component amounts for the samples detailed above are listed in Table 5.

A comparative example (Comparative Sample 6) is formed using a balanced stoichiometry. Comparative Sample 7 is also a comparative example because it contains no catalyst. The other samples (Samples 13-17) have 100 eq.% excess epoxy resin and are cured with varying amounts of 1B2MZ catalyst (0-1.1 weight percent).

Table 5.

| Sample | DER 332 | | | EDA | | | | | |
|---|---|---|---|---|---|---|---|---|---|
| | Mass (g) | Moles | Eq. | Mass (g) | Moles | Eq. | Total Mass (g) | Excess epoxy (eq. %) | 1B2MZ (wt. %) |
| Comparative Sample 6 | 400.00 | 1.156 | 2.312 | 34.74 | 0.578 | 2.312 | 434.74 | 0 | 0.00 |
| Comparative Sample 7 | 450.00 | 1.301 | 2.601 | 19.54 | 0.325 | 1.301 | 469.54 | 100 | 0.00 |
| 13 | 350.00 | 1.012 | 2.023 | 15.36 | 0.253 | 1.012 | 365.36 | 100 | 0.10 |
| 14 | 350.00 | 1.012 | 2.023 | 15.24 | 0.253 | 1.012 | 365.24 | 100 | 0.30 |
| 15 | 350.00 | 1.012 | 2.023 | 15.20 | 0.253 | 1.012 | 365.20 | 100 | 0.60 |
| 16 | 350.00 | 1.012 | 2.023 | 15.20 | 0.253 | 1.012 | 365.20 | 100 | 1.00 |
| 17 | 350.00 | 1.012 | 2.023 | 15.20 | 0.253 | 1.012 | 365.20 | 100 | 1.10 |

Properties of the above described samples are measured using the test methods described above, with the results presented in Tables 6a and 6b. The degree of conversion of the excess epoxy increases with catalyst concentration as shown by NMR.

Table 6a.

| Sample | Excess Epoxy (eq. %) | 1B2MZ (wt. %) | Excess Epoxy Conversion (%) | Density (g/cm$^3$) | DSC $T_g$ (°C) | $T_d$ (ext) (°C) | TGA $T_d$ (-5%) (°C) | Residue (%) |
|---|---|---|---|---|---|---|---|---|
| Comparative Sample 6 | 0 | 0.00 | - | 1.185 | 142 | 339 | 337 | 11.54 |
| Comparative Sample 7 | 100 | 0.00 | 0.0 | 1.188 | 49 | 342 | 284 | 10.97 |
| 13 | 100 | 0.10 | 8.0 | 1.193 | 60 | 353 | 329 | 11.74 |
| 14 | 100 | 0.30 | 45.8 | 1.188 | 87 | 360 | 353 | 11.13 |
| 15 | 100 | 0.60 | 81.6 | 1.181 | 138 | 356 | 354 | 11.28 |
| 16 | 100 | 1.00 | 95.2 | 1.182 | 173 | 357 | 356 | 10.91 |
| 17 | 100 | 1.10 | 95.2 | 1.178 | 172 | 361 | 358 | 11.00 |

Table 6b.

| Sample | Excess Epoxy (eq. %) | 1B2MZ (wt.%) | TMA $T_g$ (°C) | TMA $CTE_g$ (ppm/°C) | $CTE_r$ (ppm/°C) | DMTA $T_g$ (°C) | DMTA $G_r$ (MPa) | Fracture Toughness $K_{1c}$ (MPa-m$^{0.5}$) |
|---|---|---|---|---|---|---|---|---|
| Comparative Sample 6 | 0 | 0.00 | 147 | 76.20 | 170.10 | 143 | 26.60 | 0.71 |
| Comparative Sample 7 | 100 | 0.00 | 88 | 48.10 | 254.60 | 57 | 1.12 | 0.47 |
| 13 | 100 | 0.10 | 72 | 57.74 | 230.20 | 77 | 2.93 | 0.54 |
| 14 | 100 | 0.30 | 92 | 67.74 | 205.20 | 99 | 8.87 | 0.50 |
| 15 | 100 | 0.60 | 129 | 108.69 | 219.77 | 150 | 48.50 | 0.53 |
| 16 | 100 | 1.00 | 157 | 136.83 | 233.69 | 178 | 51.30 | 0.43 |
| 17 | 100 | 1.10 | 149 | 129.12 | 213.25 | 183 | 77.30 | 0.47 |

Unlike the D.E.R. 332-BA-THPE samples described before, the D.E.R. 332-EDA samples do not contain any chain extender. With a sufficient quantity of catalyst, the excess epoxy conversion is high enough to provide many properties (i.e., heat resistance in terms of $T_g$ and thermal stability in terms of $T_d$) better than or equal to Comparative Sample 6 having a balanced stoichiometry. The D.E.R. 332-EDA samples having excess epoxy crosslinking show neither reduced density nor improved fracture toughness.

Embodiments disclosed herein may provide for incorporation of a stoichiometric excess of epoxy resin in phenolic-cured networks, offering a way to target a particular $M_c$ or $T_g$ apart from adjusting the extender/hardener ratio. While many of the physical properties of networks prepared by the alternate routes are similar, several key differences have been observed in materials with significant degrees of etherification. First, the $T_g$ in these materials is somewhat less sensitive to changes in $M_c$ compared to using the relatively rigid THPE curing agent, possibly allowing tighter control of properties in spite of formulation variations. This change along with the lower densities of these materials suggest an increase in free volume of the networks that may also be a factor in the greater fracture toughness and tensile yielding observed.

Advantageously, etherified excess epoxy in thermoset formulations has several potential benefits. In some embodiments, a financial benefit may be realized due to the typically higher cost of hardeners with respect to epoxy resins. In other embodiments, considering the material properties, the ability of these etherified materials to yield prior to fracture, even with very high crosslink densities, will be an added benefit in some applications, especially if this behavior is enhanced such as through the incorporation of fillers and/or rubbery inclusions. Other advantages, of the compositions disclosed herein include one or more of increased heat resistance, improved fracture toughness, and higher glass transition temperatures, among others.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for curing a thermoset composition, comprising:

   reacting a curable composition comprising from 10 percent to 1000 percent stoichiometric excess of epoxy resin, an epoxy-reactive compound, and a catalyst to form a non-isolatable intermediate product having unreacted epoxy groups and secondary hydroxyl groups; and
   etherifying the non-isolatable intermediate product to react at least a portion of the unreacted epoxy groups and the secondary hydroxyl groups, catalyzed by the catalyst, to form the thermoset composition.

2. The process of claim 1, wherein the reacting comprises reacting the epoxy resin with the epoxy-reactive compound.

3. The process of claim 1, wherein the curable composition comprises from 50 percent to 500 percent stoichiometric excess of the epoxy resin.

4. The process of claim 1, wherein the catalyst is an imidazole.

5. A thermoset composition comprising the reaction product of from 10 percent to 1000 percent stoichiometric excess of an epoxy resin, an epoxy-reactive compound, and a catalyst, wherein the stoichiometric excess of epoxy resin, the epoxy-reactive material and the catalyst have reacted to form a non-isolatable intermediate product having unreacted epoxy groups and secondary hydroxyl groups and the non-isolatable intermediate product has undergone etherification to react the unreacted epoxy groups and the secondary hydroxyl groups.

6. The thermoset composition of claim 5, wherein the thermoset composition has a glass transition temperature ($T_g$) as measured by DSC greater than that of a similar epoxy-resin based composition formed using a balanced stoichiometry.

7. The thermoset composition of claim 5, further comprising at least one of a filler, a nanofiller, a surfactant, a toughening agent, and a tackifying agent.

8. The thermoset composition of claim 5, wherein the thermoset composition has a fracture toughness of at least 1.2 $MPa\cdot m^{1/2}$.

9. The thermoset composition of claim 5, wherein the thermoset composition has a density of less than 1.18 $g/cm^3$.

10. The thermoset composition of claim 5, wherein the thermoset composition has a tensile modulus of at least 3000 MPa.

11. A process for forming a composite, comprising:

    disposing a curable composition on a substrate, wherein the curable composition comprises from 10 percent to 1000 percent stoichiometric excess of an epoxy resin, an epoxy-reactive compound, and a catalyst, wherein there is a stoichiometric excess of the epoxy resin;
reacting the epoxy resin with the epoxy-reactive compound to form a non-isolatable intermediate product having unreacted epoxy groups and secondary hydroxyl groups;
etherifying the non-isolatable intermediate product to react at least a portion of the unreacted epoxy groups and the secondary hydroxyl groups, catalyzed by the catalyst, to form a thermoset composition.

12. The process of claim 11, wherein the curable composition comprises from 50 percent to 500 percent stoichiometric excess of the epoxy resin.

**Patentansprüche**

1. Ein Verfahren zum Aushärten einer wärmehärtbaren Zusammensetzung, das Folgendes beinhaltet:

   Zur-Reaktion-Bringen einer aushärtbaren Zusammensetzung, die von 10 Prozent bis 1000 Prozent stöchiometrischen Überschuss an Epoxidharz, eine epoxidreaktive Verbindung und einen Katalysator beinhaltet, um ein nicht isolierbares Zwischenprodukt zu bilden, das unreagierte Epoxidgruppen und sekundäre Hydroxylgruppen aufweist; und
   Verethern des nicht isolierbaren Zwischenprodukts, um mindestens einen Teil der unreagierten Epoxidgruppen und der sekundären Hydroxylgruppen zur Reaktion zu bringen, katalysiert durch den Katalysator, um die wärmehärtbare Zusammensetzung zu bilden.

2. Verfahren gemäß Anspruch 1, wobei das Zur-Reaktion-Bringen das Zur-Reaktion-Bringen des Epoxidharzes mit der epoxidreaktiven Verbindung beinhaltet.

3. Verfahren gemäß Anspruch 1, wobei die aushärtbare Zusammensetzung von 50 Prozent bis 500 Prozent stöchiometrischen Überschuss des Epoxidharzes beinhaltet.

4. Verfahren gemäß Anspruch 1, wobei der Katalysator ein Imidazol ist.

5. Eine wärmehärtbare Zusammensetzung, die das Reaktionsprodukt von von 10 Prozent bis 1000 Prozent stöchiometrischem Überschuss eines Epoxidharzes, einer epoxidreaktiven Verbindung und einem Katalysator beinhaltet, wobei der stöchiometrische Überschuss an Epoxidharz, das epoxidreaktive Material und der Katalysator reagiert haben, um ein nicht isolierbares Zwischenprodukt zu bilden, das unreagierte Epoxidgruppen und sekundäre Hydroxylgruppen aufweist, und das nicht isolierbare Zwischenprodukt eine Veretherung durchgemacht hat, um die unreagierten Epoxidgruppen und die sekundären Hydroxylgruppen zur Reaktion zu bringen.

6. Wärmehärtbare Zusammensetzung gemäß Anspruch 5, wobei die wärmehärtbare Zusammensetzung eine Glasübergangstemperatur ($T_g$), wie nach DSK gemessen, aufweist, die größer ist als die einer ähnlichen Zusammensetzung auf Epoxidharzbasis, welche unter Verwendung einer ausgeglichenen Stöchiometrie gebildet wurde.

7. Wärmehärtbare Zusammensetzung gemäß Anspruch 5, die ferner mindestens eines von einem Füllstoff, einem Nanofüllstoff, einem Tensid, einem Schlagzähigkeitsverbesserer und einem Klebrigmacher beinhaltet.

8. Wärmehärtbare Zusammensetzung gemäß Anspruch 5, wobei die wärmehärtbare Zusammensetzung eine Bruchzähigkeit von mindestens 1,2 MPa·m$^{1/2}$ aufweist.

9. Wärmehärtbare Zusammensetzung gemäß Anspruch 5, wobei die wärmehärtbare Zusammensetzung eine Dichte von weniger als 1,18 g/cm$^3$ aufweist.

10. Wärmehärtbare Zusammensetzung gemäß Anspruch 5, wobei die wärmehärtbare Zusammensetzung einen Zugmodul von mindestens 3000 MPa aufweist.

11. Ein Verfahren zum Bilden eines Verbundstoffes, das Folgendes beinhaltet:

    Anordnen einer aushärtbaren Zusammensetzung auf einem Substrat, wobei die aushärtbare Zusammensetzung von 10 Prozent bis 1000 Prozent stöchiometrischen Überschuss eines Epoxidharzes, eine epoxidreaktive Verbindung und einen Katalysator beinhaltet, wobei es einen stöchiometrischen Überschuss des Epoxidharzes gibt;

Zur-Reaktion-Bringen des Epoxidharzes mit der epoxidreaktiven Verbindung, um ein nicht isolierbares Zwischenprodukt zu bilden, das unreagierte Epoxidgruppen und sekundäre Hydroxylgruppen aufweist;

Verethern des nicht isolierbaren Zwischenprodukts, um mindestens einen Teil der unreagierten Epoxidgruppen und der sekundären Hydroxylgruppen zur Reaktion zu bringen, katalysiert durch den Katalysator, um eine wärmehärtbare Zusammensetzung zu bilden.

**12.** Verfahren gemäß Anspruch 11, wobei die aushärtbare Zusammensetzung von 50 Prozent bis 500 Prozent stöchiometrischen Überschuss des Epoxidharzes beinhaltet.

**Revendications**

**1.** Un procédé pour durcir une composition thermodurcissable comprenant :

la mise en réaction d'une composition durcissable comprenant de 10 pour cent à 1 000 pour cent d'excès stoechiométrique de résine époxyde, un composé réactif à l'époxyde, et un catalyseur pour former un produit intermédiaire non isolable ayant des groupes époxyde qui n'ont pas réagi et des groupes hydroxyle secondaires ; et

l'éthérification du produit intermédiaire non isolable pour la mise en réaction d'au moins une portion des groupes époxyde qui n'ont pas réagi et des groupes hydroxyle secondaires, catalysée par le catalyseur, pour former la composition thermodurcie.

**2.** Le procédé de la revendication 1, dans lequel la mise en réaction comprend la mise en réaction de la résine époxyde avec le composé réactif à l'époxyde.

**3.** Le procédé de la revendication 1, dans lequel la composition durcissable comprend de 50 pour cent à 500 pour cent d'excès stoechiométrique de la résine époxyde.

**4.** Le procédé de la revendication 1, dans lequel le catalyseur est un imidazole.

**5.** Une composition thermodurcie comprenant le produit de réaction d'une quantité allant de 10 pour cent à 1 000 pour cent d'excès stoechiométrique d'une résine époxyde, d'un composé réactif à l'époxyde, et d'un catalyseur, dans laquelle l'excès stoechiométrique de résine époxyde, la matière réactive à l'époxyde et le catalyseur ont réagi pour former un produit intermédiaire non isolable ayant des groupes époxyde qui n'ont pas réagi et des groupes hydroxyle secondaires et le produit intermédiaire non isolable a subi une éthérification pour faire réagir les groupes époxyde qui n'ont pas réagi et les groupes hydroxyles secondaires.

**6.** La composition thermodurcie de la revendication 5, la composition thermodurcie ayant une température de transition vitreuse ($T_g$) telle que mesurée par DSC supérieure à celle d'une composition à base de résine époxyde similaire formée en utilisant une stoechiométrie équilibrée.

**7.** La composition thermodurcie de la revendication 5, comprenant en sus au moins un élément parmi une charge, une nanocharge, un tensioactif, un agent de renforcement, et un agent poisseux.

**8.** La composition thermodurcie de la revendication 5, la composition thermodurcie ayant une ténacité à la rupture d'au moins 1,2 MPa·m$^{1/2}$,

**9.** La composition thermodurcie de la revendication 5, la composition thermodurcie ayant une masse volumique de moins de 1,18 g/cm$^3$.

**10.** La composition thermodurcie de la revendication 5, la composition thermodurcie ayant un module d'élasticité en traction d'au moins 3 000 MPa.

**11.** Un procédé pour former un composite, comprenant :

la disposition d'une composition durcissable sur un substrat, la composition durcissable comprenant de 10 pour cent à 1 000 pour cent d'excès stoechiométrique d'une résine époxyde, un composé réactif à l'époxyde, et un catalyseur, dans lequel il se trouve un excès stoechiométrique de la résine époxyde ;

la mise en réaction de la résine époxyde avec le composé réactif à l'époxyde pour former un produit intermédiaire non isolable ayant des groupes époxyde qui n'ont pas réagi et des groupes hydroxyle secondaires ;

l'éthérification du produit intermédiaire non isolable pour la mise en réaction d'au moins une portion des groupes époxyde qui n'ont pas réagi et des groupes hydroxyle secondaires, catalysée par le catalyseur, pour former une composition thermodurcie.

12. Le procédé de la revendication 11, dans lequel la composition durcissable comprend de 50 pour cent à 500 pour cent d'excès stoechiométrique de la résine époxyde.

Figure 1. Example NMR spectra of CEN's. (a) Key for NMR assignment of reacted glycidyl groups. Initial reaction of epoxide, left, and etherification, right. (b) NMR spectrum of CEN with 20 % excess epoxy, BA/THPE = 1.75. (c) NMR spectrum of CEN prepared with only resin and 1B2MZ catalyst.

**Figure 2.** Alkyl ether branching levels calculated from NMR spectra for plaques with excess epoxy.

**Figure 3.** Kinetics of CEN curing at 200 °C with 60 % excess epoxide resin, BA/THPE = 1.75.

**Figure 4.** Plots of Tg versus 1/Mc for data collected by (a) DSC, (b) TMA, and (c) DMTA.

**Figure 5.** Densities of the epoxy networks.

**Figure 6.** G' of the CEN's measured at Tg + 40 °C.

**Figure 7.** Tan δ curves from DMTA for (a) the phenolic-only CEN's and (b) the series of CEN's with a Bisphenol A/THPE ratio of 4. From left to right, the curves are for formulations containing (a) BA/THPE = 0.63, 1.75, 4.00, and 8.60, and (b) 5 %, 11 %, 20 %, 41 %, and 100 % excess epoxy.

**Figure 8.** Degradation temperature for the CEN's tested by TMA.

**Figure 9.** CTE in the (a) rubbery region and (b) glassy region.

**Figure 10.** Results of fracture toughness testing for CEN's

**Figure 11.** Tensile yielding of the phenolic-only CEN's.

**Figure 12.** Tensile yielding of selected samples with a BA/THPE ratio of 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005021565 A
- US 7060786 B
- US 6808819 B
- US 694919 A
- US 6469074 B
- US 4393181 A
- US 4076764 A
- US 4181784 A
- US 3969979 A
- US 4018848 A, Khanna
- WO 2004078870 A
- EP 0661322 A
- US 2750395 A
- US 2890194 A
- US 3018262 A

- US 7163973 B
- US 6632893 B
- US 6242083 B
- US 7037958 B
- US 6572971 B
- US 6153719 A
- US 5405688 A
- US 20060293172 A
- US 20050171237 A
- EP 915118 A1
- EP 906927 A1
- US 5374668 A
- WO 9900451 A
- US 5112932 A
- US 5385990 A


**Non-patent literature cited in the description**

- **LEE, H. ; NEVILLE, K.** Handbook of Epoxy Resins. McGraw-Hill Book Company, 1982